# EUROPÄISCHE PATENTSCHRIFT

(11) **EP 4 350 984 B1**
(45) Veröffentlichungstag und Bekanntmachung des Hinweises auf die Patenterteilung: **17.12.2025**
(21) Anmeldenummer: 22199385.0
(22) Anmeldetag: 03.10.2022
(51) Int. Cl.: H02S 40/36

(54) **PHOTOVOLTAIKSYSTEM, VERFAHREN ZUR ÜBERWACHUNG EINES PHOTOVOLTAIKSYSTEMS UND STECKVERBINDER**
PHOTOVOLTAIC SYSTEM, METHOD FOR MONITORING A PHOTOVOLTAIC SYSTEM AND PLUG CONNECTOR
SYSTÈME PHOTOVOLTAÏQUE, PROCÉDÉ DE SURVEILLANCE D'UN SYSTÈME PHOTOVOLTAÏQUE ET CONNECTEUR ENFICHABLE

(43) Veröffentlichungstag der Anmeldung: 10.04.2024
(73) Patentinhaber: Lapp Engineering AG, 6330 Cham (CH)
(72) Erfinder: KRECH, Johann, 72160 Horb am Neckar (DE); KURZ, Stefan, 70199 Stuttgart (DE); KÖRNER, Werner, 14169 Berlin (DE); SEGRT, Ivica, 75392 Deckenpfronn (DE)
(74) Vertreter: Rutz & Partner

(56) Entgegenhaltungen:
- EP-A1- 2 728 627
- EP-A1- 3 598 637
- US-A1- 2021 143 774

## Beschreibung

Die Erfindung betrifft ein Photovoltaiksystem insbesondere für gebäudeintegrierte Photovoltaikmodule, ein Verfahren zur Überwachung dieses Photovoltaiksystems sowie einen Steckverbinder für ein derartiges Photovoltaiksystem.

Photovoltaikmodule werden als Bauelemente vermehrt in die Gebäudehülle integriert, weshalb Entwicklungen der "Gebäudeintegrierten Photovoltaik" (GiPV) (englisch: Building-integrated Photovoltaic (BiPV)) bei der Konstruktion von Gebäuden vermehrt berücksichtigt werden.

Ein wesentlicher Faktor für die optimale Integration von Photovoltaikmodulen in die Gebäudehülle ist die Anschlusstechnik, mittels der die Verbindung zwischen Photovoltaikmodulen und dazu vorgesehenen Anschlussleitungen erstellt wird.

Gemäss der DE202011000248U1 und der EP2146383A2 wurden installierte Photovoltaikmodule traditionell an der Rückseite mit einer Anschlussvorrichtung verbunden. Zur Realisierung der GiPV-Technologie wird in diesen Dokumenten hingegen vorgeschlagen, die Anschlussvorrichtungen in einem Gehäuse am Rand der Photovoltaikmodule anzuordnen, wodurch der Vorteil resultiert, dass an der Rückseite der Photovoltaikmodule auf Anschlussarbeiten verzichtet werden kann und zudem weniger Raum in Anspruch genommen wird.

Aufgrund der seitlich vorgesehenen Anschlussvorrichtungen resultiert hingegen der Nachteil, dass sich die Wirkungsfläche der installierten Photovoltaikmodule im Verhältnis zur Baufläche reduziert. Zudem ist der Zugriff zu den Anschlussvorrichtungen zwischen den Photovoltaikmodulen wesentlich eingeschränkt, sodass Installationsarbeiten und Reparaturarbeiten, insbesondere Arbeiten zum Austausch eines Photovoltaikmoduls, sich aufwendig gestalten können. Darüber hinaus sind die seitlich angebrachten Anschlussvorrichtungen an der Fassade eines Gebäudes sichtbar, was die architektonischen Gestaltungsmöglichkeiten reduziert.

Aus der EP3598637A1 ist ein Photovoltaiksystem mit einem ersten und einem zweiten Anschlussmodul bekannt. Das erste Anschlussmodul ist elastisch verschiebbar an einer Montageleiste gehalten. Das zweite Anschlussmodul ist lösbar oder fest mit dem Photovoltaikmodul verbunden. Das erste und zweite Anschlussmodul sind im montierten Zustand miteinander elektrisch gekoppelt.

Durch Vibration, unsachgemässe Montage, Montagefehler oder repetitive und temperaturbedingte Ausdehnungs- und Zusammenziehungszyklen kann die elektrische Koppelung zwischen dem ersten Anschlussmodul und dem zweiten Anschlussmodul fehlerhaft werden, wodurch eine nahezu widerstandslose Übertragung der im Photovoltaikmodul produzierten elektrischen Energie verhindert wird.

Im Betrieb kommt es regelmässig vor, dass einzelne Photovoltaikzellen von Photovoltaikmodulen beispielsweise durch Wolken, aufgewehte Blätter, Gebäudeteile, Leuchten oder Bäume verschattet werden. Diese verschatteten Photovoltaikzellen , die in Serie mit nicht verschatteten Photovoltaikzellen geschaltet sind, können in der Folge keine elektrische Spannung mehr erzeugen. Anstelle einer selbst erzeugten positiven Spannung liegt in der Folge eine möglicherweise hohe negative Spannung an der verschatteten Photovoltaikzelle an, die von den nicht verschatteten Photovoltaikzellen erzeugt wird. In diesem Falle wirkt die verschattete Photovoltaikzelle als Verbraucher und erwärmt sich entsprechend bis ein Defekt, gegebenenfalls ein Durchbruch auftritt.

Wie dies in der US6020555A beschrieben ist, werden zur Vermeidung dieses Problems Bypassdioden parallel und in Sperrrichtung zu den Photovoltaikzellen geschaltet, die beim unverschatteten Betrieb der Photovoltaikzellen sperren und beim verschatteten Betrieb der Photovoltaikzellen aufgrund der invertierten Spannung die verschattete Photovoltaikzelle überbrücken und den Strom der weiteren Photovoltaikzellen leiten können. Der Strom wird somit durch die Bypassdiode und nicht durch die verschattete Photovoltaikzelle geführt, weshalb sich diese auch nicht erwärmen kann.

Bypassdioden können mit der Zeit, beispielsweise durch eine Vielzahl an Schaltzyklen oder durch elektrische Überlast, defekt werden. Ebenso kann der elektrische Anschluss der Bypassdioden fehlerhaft oder defekt sein. In diesen Fällen müssen die Bypassdioden ausgetauscht und elektrisch neu angeschlossen werden. Hierzu müssen die aus dem Stand der Technik bekannten Photovoltaikmodule komplett demontiert werden, um fehlerhafte oder defekte Bypassdioden zu orten und zu ersetzen. Dies ist mit einem hohen Aufwand und/oder einer längeren Unterbrechung der Photovoltaikmodule verbunden.

Weiterhin ist zu beachten, dass durch die Montage der Bypassdioden an den Photovoltaikmodulen auch ein erhöhter Herstellungsaufwand des Photovoltaiksystems resultiert.

Fehler des Photovoltaiksystems sind dabei nur schwer erkennbar. Sofern das Photovoltaiksystem nicht mehr die maximale Leistung erbringt, ist kaum feststellbar, ob dies durch Abschattung oder durch weitere Beeinträchtigungen verursacht wird.

Die EP2728627A1 offenbart eine Verbindungseinrichtung zur Anordnung an einem Rahmen eines Photovoltaikmoduls, die Anschlusselemente und eine Reihenschaltung von Dioden umfasst.

Der vorliegenden Erfindung liegt daher die Aufgabe zugrunde, ein verbessertes Photovoltaiksystem, ein Verfahren zur Überwachung des Photovoltaiksystems sowie einen Steckverbinder für ein Photovoltaiksystem zu schaffen.

Das Photovoltaiksystem soll in einfacher Weise aufgebaut und gewartet werden können. Photovoltaiksystem und die Photovoltaikmodule sollen zudem mit reduzierten Kosten gefertigt werden können.

Die Montage und Demontage einzelner Photovoltaikmodule soll besonders einfach möglich sein, sodass die Installation der Photovoltaikmodule auch an exponierten Stellen eines Gebäudes rasch erfolgen kann. Das erfindungsgemässe Photovoltaiksystem soll insbesondere für fassadenintegrierte Photovoltaik vorteilhaft verwendbar sein und eine schnelle Installation ermöglichen.

Weiterhin sollen defekte oder in der Funktion gestörte elektrische Komponenten, insbesondere Bypassdioden oder andere Bypassdioden, einfach lokalisierbar und austauschbar sein.

Ferner sollen weitere Beeinträchtigungen des Photovoltaiksystems erkennbar und vorzugsweise identifizierbar sein.

Erfindungsgemässe Steckverbinder sollen in einfacher Weise aufgebaut und gewartet werden können. Der elektrische Anschluss einzelner Photovoltaikmodule soll mit dem Steckverbinder besonders einfach möglich sein, sodass die Installation der Photovoltaikmodule auch an exponierten Stellen eines Gebäudes rasch erfolgen kann. Erfindungsgemässe Steckverbinder sollen dabei für den elektrischen Anschluss eines fassadenintegrierten Photovoltaikmoduls vorteilhaft verwendbar sein und eine schnelle Installation ermöglichen.

Ferner soll beim erfindungsgemässen Photovoltaiksystem, insbesondere beim erfindungsgemässen Steckverbinder, das Risiko einer unsachgemässen Montage reduziert sein.

Der erfindungsgemässe Steckverbinder soll eine optimale Wirkungsfläche aufweisen und mit optimaler Verbindungstechnik ausgerüstet sein und über lange Zeit, auch unter erschwerten Witterungsverhältnissen, störungsfrei arbeiten können.

Der erfindungsgemässe Steckverbinder soll zudem einfach aufgebaut sein und mit geringem Aufwand mit Steckverbinderkontakten bestückbar sein. Die Anschlussleitungen und Verbindungskontakte sollen dabei keinen Belastungen ausgesetzt sein, sodass qualitativ hochwertige elektrische Verbindungen resultieren und Kontaktprobleme langfristig vermieden werden.

Der erfindungsgemässe Steckverbinder soll im zusammengefügten Zustand die darin gehaltenen Steckverbinderkontakte optimal gegen Witterungseinflüsse schützen und eine lange Betriebsdauer gewährleisten.

Der erfindungsgemässe Steckverbinder soll zudem nur wenig Raum in Anspruch nehmen und alle diesbezüglichen Anforderungen der GiPV/BIPV-Technologie optimal erfüllen.

Diese Aufgabe wird mit einem Photovoltaiksystem gemäss Anspruch 1, einem Verfahren zur Überwachung des Photovoltaiksystems gemäss Anspruch 10 und einem Steckverbinder gemäss Anspruch 12 gelöst. Vorteilhafte Ausgestaltungen der Erfindung sind in weiteren Ansprüchen angegeben.

Das Photovoltaiksystem umfasst wenigstens ein Photovoltaikmodul, das durch Steckverbinderkontakte von zwei miteinander verbundenen Steckverbindermodulen eines Steckverbinders und durch Verbindungsleitungen mit einem Schaltschrank verbunden ist und das mehrere Sektoren mit je wenigstens einer Photovoltaikzelle aufweist, welche Sektoren in Serie zueinander geschaltet und mit ihren elektrischen Anschlüssen derart mit Anschlüssen von Bypassdioden eines zugehörigen Diodenarrays verbunden sind, dass die Bypassdioden des zugehörigen Diodenarrays in Serie zueinander geschaltet sind und jede dieser Bypassdioden einem der Sektoren zugeordnet und bezüglich dieses Sektors in Sperrrichtung geschaltet ist.

Erfindungsgemäss ist vorgesehen, dass die Anschlüsse der Sektoren des wenigsten einen Photovoltaikmoduls durch den Steckverbinder und die Verbindungsleitungen mit den im Schaltschrank angeordneten Bypassdioden des zugehörigen Diodenarrays verbunden sind.

Das Photovoltaikmodul umfasst beispielsweise drei Sektoren mit jeweils elektrisch in Serie geschalteten Photovoltaikzellen. Der erste Sektor ist durch eine erste elektrische Verbindung und eine zweite elektrische Verbindung elektrisch leitend mit einer ersten Diode parallel geschaltet. Der zweite Sektor ist über die zweite elektrische Verbindung und eine dritte elektrische Verbindung elektrisch leitend mit einer zweiten Diode parallel geschaltet. Der dritte Sektor ist über die dritte elektrische Verbindung und eine vierte elektrische Verbindung elektrisch leitend mit einer dritten Diode parallel geschaltet ist. Somit ist jeder Sektor des Photovoltaikmoduls mit einer zugehörigen Diode parallel geschaltet und kann im Verschattungsfall durch diese elektrisch überbrückt werden. Für drei in Serie miteinander verbundene Sektoren sind somit vier elektrische Verbindungen vorgesehen. Für n Sektoren werden n+1 elektrische Verbindungen benötigt.

Erfindungsgemäss ist zwischen den Sektoren des Photovoltaikmoduls und den Bypassdioden ein Steckverbinder vorgesehen, durch den beim Ausführungsbeispiel mit drei Sektoren die vier elektrischen Verbindungen elektrisch leitend durchgeführt und elektrisch trennbar sind. Durch den Steckverbinder ist das Photovoltaikmodul schnell und sicher elektrisch anschliessbar, wodurch die Montagezeit reduziert wird. Die Bypassdioden sind elektrisch vom Photovoltaikmodul trennbar und können räumlich getrennt vom Photovoltaikmodul im Schaltschrank angeordnet werden. Der Schaltschrank kann in beliebigen Ausgestaltungen vorliegen und umfasst wenigstens einen Aufnahmeraum für die in Serie zueinander geschalteten Bypassdioden und gegebenenfalls weitere elektrische oder elektronische Bauteile oder Module.

Hierdurch sind die Bypassdioden im Falle eines Defekts oder eines periodischen Austauschs einfach zugänglich, wodurch die wartungsfallbedingte Unterbrechung des Photovoltaiksystems verkürzt wird. Ebenso gestaltet sich die Fehlersuche einfacher und effizienter.

Vorzugsweise umfasst das Photovoltaiksystem eine Vielzahl an Photovoltaikmodulen, die jeweils mehrere Sektoren mit elektrisch in Serie verbundenen Photovoltaikzellen aufweisen. Beim Vorliegen von drei Sektoren sind diese für jedes Photovoltaikmodul jeweils derart elektrisch verbunden, dass der erste Sektor durch eine erste elektrische Verbindung und eine zweite elektrische Verbindung elektrisch leitend mit einer ersten Diode parallel geschaltet ist. Der zweite Sektor ist über die zweite elektrische Verbindung und eine dritte elektrische Verbindung elektrisch leitend mit einer zweiten Diode parallel geschaltet. Der dritte Sektor ist über die dritte elektrische Verbindung und eine vierte elektrische Verbindung elektrisch leitend mit einer dritten Diode parallel geschaltet.

Zwischen jedem Photovoltaikmodul mit beispielsweise drei Sektoren und den entsprechenden drei Bypassdioden ist jeweils ein Steckverbinder angeordnet, durch den die vier elektrischen Verbindungen durchgeführt und elektrisch trennbar sind. Die Anzahl der Photovoltaikmodule und die Anzahl der Sektoren pro Photovoltaikmodul ist beliebig wählbar.

In vorzugsweisen Ausgestaltungen sind die Verbindungsleitungen zwischen dem Steckverbinder und den Bypassdioden ummantelt und zu einem einzelnen Anschlusskabel gruppiert. Hierdurch ist eine einfache und schnelle Installation der elektrischen Verbindungen möglich. Durch einen geeigneten Kabelmantel sind die elektrischen Verbindungen zudem gut gegen äussere Einflüsse wie Feuchtigkeit oder Sonneneinstrahlung geschützt, wodurch sich die Lebensdauer dieser Komponenten erhöht. Weiter bevorzugt ist die Gruppierung zu einem einzelnen Anschlusskabel der Verbindungsleitungen im Inneren des Steckverbinders, vorzugsweise im Inneren des zweiten Steckverbindermoduls, realisiert.

In einer weiteren besonders bevorzugten Ausgestaltung weist das Anschlusskabel eine Länge von zumindest 3m, vorzugsweise zumindest 5m, weiter bevorzugt zumindest 10m, auf. Hierdurch wird eine räumliche Trennung von Photovoltaikmodulen und Bypassdioden ermöglicht. Die Bypassdioden können somit unabhängig vom Installationsort der Photovoltaikmodule angeordnet werden. Insbesondere können die Bypassdioden an einem einfach zugänglichen Ort, vorzugsweise im Inneren des mit dem Photovoltaiksystem ausgerüsteten Gebäudes, angeordnet werden, so dass sie im Schadensfall einfach austauschbar sind.

Vorzugsweise sind die Elemente der elektrischen Verbindungen, die Kontakte des Steckverbinders und/oder die Verbindungsleitungen und/oder die Anschlüsse der Bypassdioden, codiert. So kann der Installationsaufwand reduziert werden, da die einzelnen Leitungen bei der Installation jeweils nicht durchgemessen werden müssen. Verdrahtungsfehler können weitgehend ausgeschlossen werden. Die Kodierung kann durch farbliche Markierungen oder andere Zeichen realisiert werden.

In einer vorzugsweisen Ausgestaltung sind die einem Photovoltaikmodul zugehörenden Bypassdioden zu einem Diodenarray gruppiert. Die Bypassdioden und/oder die Diodenarrays sind im Schaltschrank angeordnet. Ein Diodenarray ist vorzugsweise als einzelnes elektronisches Bauteil ausgestaltet. Besonders bevorzugt sind die Bypassdioden und/oder die Diodenarrays einzeln austauschbar. Die Bypassdioden und/oder die Diodenarrays sind somit einfach zugänglich und schnell austauschbar. Zu beachten ist, dass bei der erfindungsgemässen Anordnung der Bypassdioden und Diodenarrays die Montage der Bypassdioden an den Photovoltaikmodulen entfällt, weshalb diese mit reduziertem Aufwand gefertigt werden können. Eine weitere Kostenreduktion resultiert bei der Verwendung von Diodenarrays, die kostengünstiger sind als einzelne Bypassdioden entsprechender Anzahl.

Die Bypassdioden sind vorzugsweise p-n-Dioden, Zener-Dioden oder Schottky Dioden.

Der Steckverbinder umfasst zwei Steckverbindermodule, einen Stecker und eine Steckerkupplung mit entsprechenden Kontakten, welche miteinander elektrisch verbindbar und über am ersten Steckverbindermodul angeordnete erste Verriegelungselemente und am zweiten Steckverbindermodul angeordnete zweite Verriegelungselemente mechanisch stabil miteinander verbindbar und lösbar sind. Durch die Verriegelungselemente, welche vorzugsweise nur eine vorgegebene Steckrichtung und Steckposition erlauben, wird das Risiko eines unsachgemässen Anschlusses des Steckverbinders durch einen Installateur reduziert.

Dabei ist vorgesehen, dass das eine Steckverbindermodul seitlich angeordnete erste elastische Verriegelungselemente aufweist, die stabförmig ausgebildet und mit einem ersten Rastelement versehen sind, und dass das andere Steckverbindermodul zu den ersten Verriegelungselementen korrespondierende seitlich angeordnete zweite Verriegelungselemente aufweist, die hülsenförmig ausgestaltet sind und ein zweites Rastelement, das zum ersten Rastelement korrespondiert, aufweisen. Die stabförmigen ersten Verriegelungselemente dienen dabei als Führungselemente, die es erlauben, die Steckverbindermodule präzise zueinander auszurichten und gegeneinander zu führen.

In weiteren vorzugsweisen Ausgestaltungen ist zwischen dem Photovoltaikmodul und dem Steckverbinder eine Montageplatte angeordnet, auf welcher das Photovoltaikmodul und/oder das erste Steckverbindermodul anbringbar ist. Hierdurch können Photovoltaikmodule einfach installiert werden, insbesondere an der Fassade eines Gebäudes.

Vorzugsweise ist zumindest ein Photovoltaikmodul des erfindungsgemässen Photovoltaiksystems ein fassadenintegriertes Photovoltaikmodul.

In einer weiteren bevorzugten Ausgestaltung weist die Montageplatte Montageöffnungen zur Durchführung der elektrischen Verbindungen auf. In die Montageöffnungen ist jeweils vorzugsweise eine Durchführung zur Abdichtung der durchgeführten elektrischen Verbindung eingesetzt. Besonders bevorzugt sind die elektrischen Verbindungen im Bereich der Montageöffnungen jeweils als Anschlusskontakte zur elektrischen Kontaktierung einer Busbar oder einer Sammelleitung der Photovoltaikmodule ausgestaltet.

Besonders bevorzugt sind das Gehäuse des montierten Steckverbindermoduls und die Montageplatte aus Materialien mit ähnlichen thermischen Ausdehnungskoeffizienten gefertigt. Hierdurch wird die elektrische Verbindung auch bei temperaturbedingten Schwankungen keinen mechanischen Spannungen unterworfen, wodurch eine Änderung des Kontaktwiderstandes vermieden wird. Vorzugsweise sind das Gehäuse des montierten Steckverbindermoduls und die Durchführung aus Materialien mit ähnlichen thermischen Ausdehnungskoeffizienten gefertigt. Weiter bevorzugt sind die Montageplatte und die Durchführung aus Materialien mit ähnlichen thermischen Ausdehnungskoeffizienten gefertigt. Vorzugsweise ist die Durchführung so ausgestaltet, dass sie Spannungen aufgrund von unterschiedlicher thermischer Ausdehnung ausgleichen kann.

Besonders bevorzugt weist das erste Steckverbindermodul am Gehäuse einen Montageflansch auf, an welchem das erste Steckverbindermodul an der Montageplatte anbringbar ist.

Alternativ ist das erste Steckverbindermodul durch Lamination oder Verkleben an der Montageplatte anbringbar.

Grosse Flächen, wie Dächer und Gebäudefassaden, können mit dem erfindungsgemässen Photovoltaiksystem vorteilhaft ausgerüstet werden. Das Photovoltaiksystem kann rasch aufgewandt und mit minimalem Aufwand gewartet werden, wobei allfällige Mängel, Fehlfunktionen, ungenügende Performance oder Defekte rasch ermittelt werden können.

Selbst bei grossen Photovoltaiksystemen kann eine Fehlersuche mit minimalem zeitlichen Aufwand oder gar automatisch vollzogen werden. Die Bypassdioden sind elektrisch von den Photovoltaikmodulen getrennt. Hierdurch sind die Bypassdioden im Falle eines Defekts oder eines periodischen Austauschs einfach zugänglich, wodurch ein Austausch gegebenenfalls auch ohne Ausserbetriebsetzung des Photovoltaiksystems vollzogen werden kann.

In vorzugsweisen Ausgestaltungen ist eine Überwachungsvorrichtung vorgesehen, mittels der die Spannungen an den Anschlüssen der Bypassdioden gemessen und ausgewertet werden und eine Unregelmässigkeit oder Fehlfunktion des Photovoltaiksystems insbesondere eine Fehlfunktion einer der Bypassdioden, erkannt und vorzugsweise signalisiert wird.

Vorzugsweise werden die Spannungen an den Anschlüssen der Bypassdioden und/oder die zeitlichen Verläufe der Spannungen an den Anschlüssen der Bypassdioden gemessen und ausgewertet. Vorzugsweise werden die Messwerte untereinander oder mit Sollwerten verglichen, um elektrische Unterbrechungen oder Defekte der Bypassdioden oder langfristige Abschattungen festzustellen.

Sofern eine Photovoltaikzelle beispielsweise verschattet ist und keine Spannung erzeugt und währenddessen eine negative Spannung an der verschatteten

Photovoltaikzelle anliegt, kann festgestellt werden, dass die entsprechende Bypassdiode nicht leitend und möglicherweise defekt oder ein Anschlusskontakt schadhaft ist. Sofern über einer der Bypassdioden während längerer Zeit, beispielsweise über mehrere Tage, keine Spannung anliegt, während über den anderen Bypassdioden zur gleichen Zeit Spannungen anliegen, so kann festgestellt werden, dass eine permanente Fehlfunktion des Photovoltaiksystems oder eine permanente Abschattung der betreffenden Photovoltaikzellen vorliegt.

Die Überwachungsvorrichtung, die vorzugsweise in allen Ausgestaltungen ein Computersystem umfasst, kann daher eine entsprechende Fehlermeldung generieren und beispielsweise über ein Netzwerk, wie das Internet an das Wartungspersonal senden. In der Folge kann ein Objekt, welches eine permanente Abschattung verursacht, beseitigt werden. Alternativ können defekte Teile des Photovoltaiksystems ersetzt werden.

Somit ist eine automatische Überwachung des Photovoltaiksystems möglich, welche erlaubt, das Photovoltaiksystem stets optimal zu betreiben. Dabei werden Fehler, wie der Ausfall von Bypassdioden, automatisch gemeldet.

Nach der Feststellung eines Defekts kann das Photovoltaiksystem zudem in einen Zustand überführt werden, indem sichergestellt wird, dass keine weiteren Schäden auftreten. Beispielsweise können weitere Sektoren, die mit entsprechenden Schaltmitteln versehen sind, abgeschaltet werden, um zu verhindern, dass an verschatteten Photovoltaikzellen kritische negative Spannungen benachbarter Photovoltaikzellen anliegen.

Nachfolgend wird die Erfindung anhand von Zeichnungen näher erläutert. Dabei zeigt:
- Fig. 1: ein erfindungsgemässes Photovoltaiksystem 10 mit einem ebenfalls erfindungsgemässen Steckverbinders 1;
- Fig. 2: ein erfindungsgemässer Steckverbinder 1 mit einem ersten Steckverbindermodul 1A und einem zweiten Steckverbindermodul 1B, die miteinander verbunden sind;
- Fig. 3: der Steckverbinder 1 von Fig. 2 in einer weiteren Ansicht;
- Fig. 4a: der Steckverbinder 1 von Fig. 2 in einer Explosionsdarstellung mit teilweise geschnittenen Steckverbindermodulen 1A, 1B;
- Fig. 4b: der Steckverbinder 1 von Fig. 4a in einer weiteren Ansicht;
- Fig. 5: einen Ausschnitt eines Steckverbinders 1 in einer teilweise geschnittenen Ansicht;
- Fig. 6: der Steckverbinder 1 von Fig. 2 in einer teilweise geschnittenen Ansicht;
- Fig. 7: ein erstes Steckverbindermodul 1A an einer Montageplatte7 mit Montageöffnungen 70 und einer separat dargestellten Dichtung 5;
- Fig. 8: eine erstes Steckverbindermodul 1A an einer Montageplatte 7 mit Montageöffnungen 70 und darin eingesetzten Durchführungen 5 sowie einer separat dargestellten Durchführung 5, die aus einer Öffnung 70 der Montageplatte 7 entnommen wurde;
- Fig. 9a: eine zweite Ausgestaltung eines erfindungsgemässen Steckverbinders 1 mit einem Werkzeug 99; und
- Fig. 9b: der Steckverbinder 1 von Fig. 9a in einer Explosionsdarstellung.

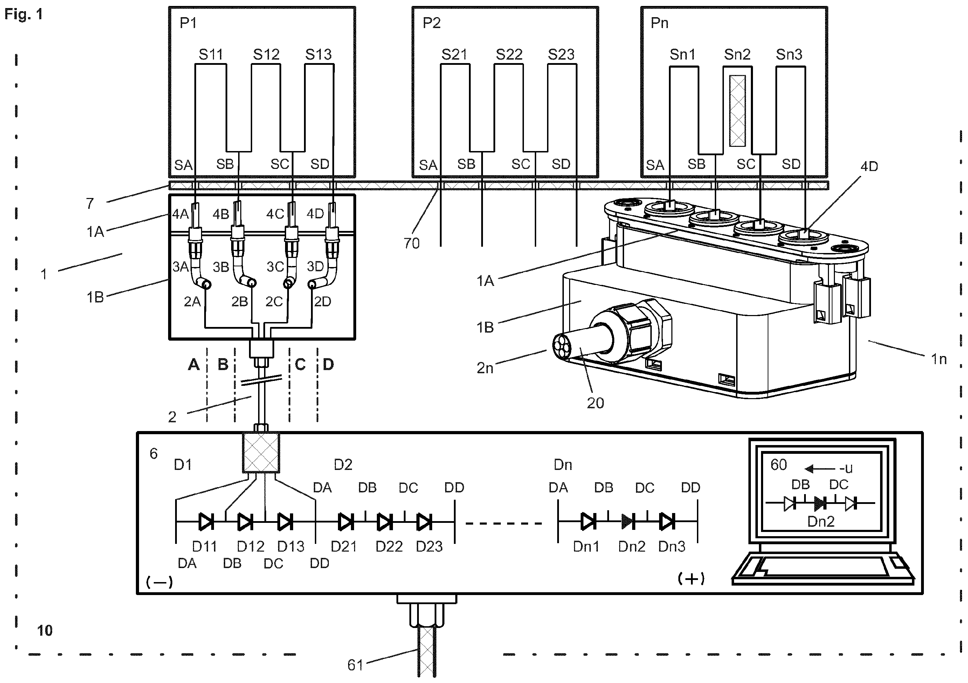

Fig. 1 zeigt ein erfindungsgemässes Photovoltaiksystem 10 mit einem ebenfalls erfindungsgemässen Steckerverbinder 1, der ein erstes Steckverbindermodul 1A mit Buchsenkontakten 4A, 4B, 4C, 4D und ein zweites Steckverbindermodul 1B mit Steckerkontakten 3A, 3B, 3C, 3D aufweist. Das Photovoltaiksystem 10 umfasst eine Vielzahl von Photovoltaikmodulen P1, P2, ..., Pn. In dieser vorzugsweisen Ausgestaltung umfasst jedes Photovoltaikmodul P1, P2,...,Pn drei Sektoren S11, S12, S13; S21, S22, S23;...;Sn1, Sn2, Sn3 mit jeweils elektrisch in Serie verbundenen Photovoltaikzellen. Nachstehend wird Verbindung des ersten Photovoltaikmoduls P1 mit einem zugehörigen Array D1; ...; Dn von Bypassdioden D11, D12, D13, D21, D22, D32,..., Dn1, Dn2, Dn3 Array D1; ...; Dn von Bypassdioden D11, D12, D13, D21, D22, D32,..., Dn1, Dn2, Dn3

Jedes Photovoltaikmodul P1, P2,...,Pn ist durch einen Steckverbinder 1; ...; 1n und Verbindungsleitungen 2A, 2B, 2C, 2D mit einem Array D1; ...; Dn von Bypassdioden D11, D12, D13; D21, D22, D32;...; Dn1, Dn2, Dn3 verbunden, die in einem Schaltschrank 6 angeordnet sind.

Zwischen den Photovoltaikmodulen P1, P2,...,Pn und den Steckverbindern 1; ...; 1n ist eine Montageplatte 7 mit Durchführungsöffnungen 70 vorgesehen, durch die hindurch die Anschlüsse SA, SB, SC, SD der Sektoren S11, S12, S13; S21, S22, S23;...;Sn1, Sn2, Sn3 zu den Buchsenkontakten 4A, 4B, 4C, 4D der ersten Steckverbindermodule 1A geführt sind. Die Buchsenkontakte 4A, 4B, 4C, 4D sind über die Steckerkontakte 3A, 3B, 3C, 3D des zweiten Steckverbindermoduls 1B mit den Verbindungsleitungen 2A, 2B, 2C, 2D verbunden, die mit den Anschlüssen DA, DB, DC, DD des zugehörigen Diodenarrays D1; D2; ...; Dn verbunden sind.

Zwischen den Anschlüsse SA, SB, SC, SD der Sektoren S11, S12, S13 des Photovoltaikmoduls P1 und den Bypassdioden D11, D12, D13 des zugehörigen Diodenarrays D1 resultieren somit elektrische Verbindungen die symbolisch gezeigt und den Buchstaben A, B, C, D gekennzeichnet sind. Mit diesen Buchstaben A, B, C, D sind auch die Anschlüsse SA, SB, SC, SD; die Buchsenkontakte 4A, 4B, 4C, 4D; die Steckerkontakte 3A, 3B, 3C, 3D; die Verbindungsleitungen 2A, 2B, 2C, 2D und die Anschlüsse DA, DB, DC, DD des zugehörigen Diodenarrays D1 gekennzeichnet. An den Verbindungsleitungen 2A, 2B, 2C, 2D entsprechende Fahnen vorgesehen sein. Die Buchstaben A, B, C, D können ferner in die Gehäuse der Steckverbindermodule 1A, 1B, in die Montageplatte 7 und beispielsweise in eine Montageleiste des zugehörigen Diodenarrays D1 eingeprägt sein. Zusätzlich oder alternativ können die die zueinander korrespondierenden Verbindungselemente auch mit denselben Farben gekennzeichnet sein, sodass Fehlverbindungen oder Fehlverdrahtungen ausgeschlossen sind.

Die Elemente der elektrischen Verbindungen A, B, C, D sind vorzugsweise als isolierte Einzelleiter, als Leiterbänder oder als gedruckte Leiterbahnen ausgestaltet. Die elektrischen Verbindungen A, B, C, D können insbesondere auf unterschiedlichen Abschnitten innerhalb des Photovoltaiksystems 1 unterschiedliche ausgestaltet sein.

Die mit den Steckerkontakten 3A, 3B, 3C, 3D des zweiten Steckverbindermoduls 1B verbundenen Verbindungsleitungen 2A, 2B, 2C, 2D von einer Ummantelung 20 umschlossen in einem Anschlusskabel 2 gruppiert. Das Anschlusskabel 2 führt die Verbindungsleitungen 2A, 2B, 2C, 2D zum Schaltschrank 6, in dem die zu den Photovoltaikmodulen P1, P2,..., Pn korrespondierenden Diodenarrays D1, D2,..., Dn angeordnet sind. Jedes Diodenarray D1, D2,..., Dn umfasst jeweils drei Bypassdioden D11, D12, D13; D21, D22, D23;...; Dn1, Dn2, Dn3, die je einem der Photovoltaikmodul P1, P2,..., Pn zugeordnet sind.

Jede erste Bypassdiode D11, D21, ..., Dn1 ist parallel zum ersten zugehörigen Sektor S11, S21,..., Sn1 geschaltet. Jede zweite Bypassdiode D12, D22,...,Dn2 ist parallel zum zweiten zugehörigen Sektor S12, S22,..., Sn2 geschaltet. Jede dritte Bypassdiode D13, D23,...,Dn3 ist parallel zum dritten zugehörigen Sektor S13, S23,..., Sn3 geschaltet. Die Bypassdioden D11, D12, D13, D21, D22, D23,..., Dn1, Dn2, Dn3 sind seriell zueinander und je parallel und in Sperrrichtung zu den Photovoltaikzellen des zugehörigen Sektors S11, S21,..., Sn1 geschaltet.

Im Schaltschrank 6 sind die entsprechenden Lagen der Kathode (-) und Anode (+) durch die entsprechenden Vorzeichen skizziert und vorzugsweise markiert, wie dies oben aufgeführt wurde.

Die Funktion der Bypassdioden D11, D12, D13, D21, D22, D23,..., Dn1, Dn2, Dn3 wurde eingangs beschriebenen. Bei einer Abschaltung oder bei Ausfall einer Photovoltaikzelle und Auftreten einer invertierten Spannung werden diese leitend und überbrücken den ausgefallenen Sektor S11, S21,..., Sn1.

Bei einem Defekt an einem oder mehreren Bypassdioden D11, D12, D13, D21, D22, D23,..., Dn1, Dn2, Dn3 können diese einfach im Schaltschrank 6 lokalisiert und ausgetauscht werden. Gegebenenfalls kann jeweils auch ein komplettes Diodenarray D1, D2,..., Dn ersetzt werden.

Der durch das Photovoltaiksystem 10 produzierte elektrische Strom wird aus dem Schaltschrank 6 über eine Sammelleitung 61 weitergeleitet.

Der vorzugsweisen Ausgestaltung von Fig. 1 ist ferner eine Überwachungsvorrichtung 60 vorgesehen, mittels der die Spannungen an den Anschlüssen DA, DB; DB, DC; DC, DD der Bypassdioden D11; D12; D13 messbar und auswertbar sind und eine Unregelmässigkeit oder Fehlfunktion des Photovoltaiksystems 10, insbesondere eine Fehlfunktion einer der Bypassdioden D11, D12, D13, D21, D22, D32,..., Dn1, Dn2, Dn3, erkennbar und vorzugsweise signalisierbar ist.

Schematisch ist gezeigt, dass die Spannung über der Bypassdiode Dn2 negativ ist und der betreffende Sektor Sn2 verschattet ist, wie dies mit einem schraffierten Rechteck symbolisch gezeigt ist. Obwohl die Bypassdiode Dn2 aufgrund der invertierten Spannung nun in Durchlassrichtung betrieben wird, führt sie keinen Strom, weshalb die Spannung auch nicht abgebaut wird. Möglicherweise liegt somit ein Defekt der Bypassdiode Dn2 und gegebenenfalls ein Defekt einer Photovoltaikzelle vor.

Vorzugsweise werden die zeitlichen Verläufe der Spannungen an den Anschlüssen DA, DB; DB, DC; DC, DD der Bypassdioden D11; D12; D13 gemessen, um weitere Informationen zu gewinnen. Beispielsweise kann ermittelt werden, wie sich eine Abschattung entwickelt, die beispielsweise durch Wachstum von Pflanzen, fallendes Laub oder Verunreinigungen verursacht wird. In der Folge kann dem Wartungspersonal signalisiert werden, an welchem Bereich der Photovoltaikanlage Wartungsarbeiten zu vollziehen sind, um die Abschattung zu beseitigen.

Die Überwachungsvorrichtung 60 umfasst vorzugsweise eine Messvorrichtung, mittels der die Spannungen erfasst und in digitale Werte gewandelt werden können. Weiterhin ist ein Computer mit einem Betriebsprogramm vorgesehen, welches ermittelten Werte verarbeitet und ausgewertet. In einer Speicher sind vorzugsweise Sollwerte für das Photovoltaiksystem 10 abgelegt, die vom Werk vorgegeben sind oder die bei der Installation erfasst und gespeichert wurden. Weiter ist eine Kommunikationsvorrichtung vorgesehen, die beispielsweise über das Internet Statusberichte und Fehlermeldungen an den Wartungsdienst übermitteln kann.

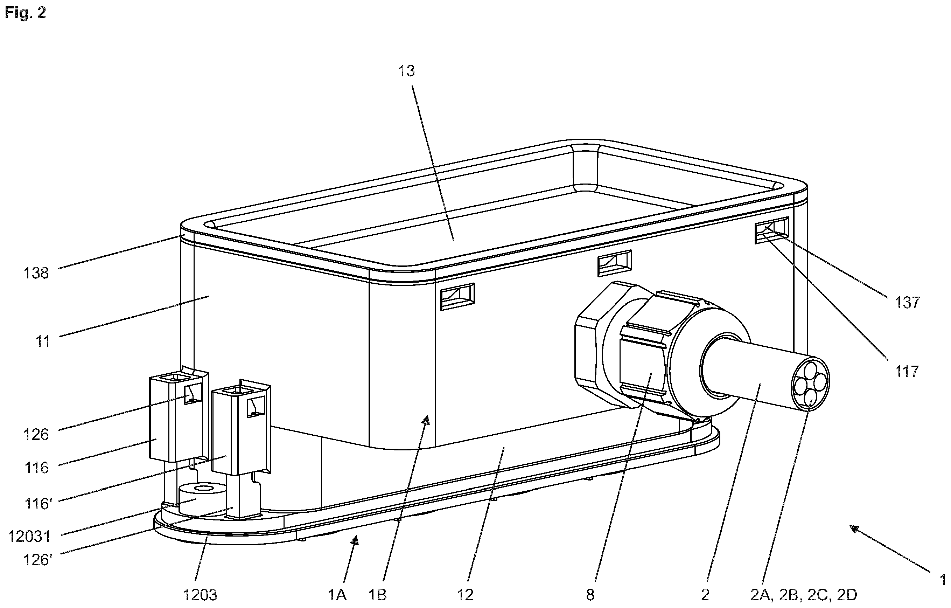

Fig. 2 zeigt einen erfindungsgemässen Steckverbinder 1 mit einem ersten Steckverbindermodul 1A und einem zweiten Steckverbindermodul 1B, die miteinander verbunden sind. Der gezeigte Steckverbinder 1 ist für die Verwendung im erfindungsgemässen Photovoltaiksystem 10 von Fig. 1 geeignet. Das erste Steckverbindermodul 1A umfasst ein Gehäuse 12, an welches ein Montageflansch 1203 angeformt ist. Am Montageflansch 1203 ist eine Befestigungsöffnung 12031 angeordnet. Über den Montageflansch 1203 ist das erste Steckverbindermodul 1A, respektive der Steckverbinder 1 an der Montageplatte 70 anlegbar (siehe Fig.1). Über die Befestigungsöffnung 12031 ist das erste Steckverbindermodul 1A mit einer solchen Montageplatte mittels geeigneter Befestigungsmittel wie Schrauben befestigbar.

Auf dem Montageflansch 1203 sind in Richtung des zweiten Steckverbindermoduls 1B zweite Verriegelungselemente 126, 126' angeformt. Die zweiten Verriegelungselemente 126, 126', die stabförmig und elastisch ausgebildet sind, können in korrespondierende erste Verriegelungselemente 116, 116' am zweiten Steckverbindermodul 1B eingreifen und in diesen lösbar verrastet werden.

Das zweite Steckverbindermodul 1B umfasst ein Gehäuse 11 und eine dieses verschliessende Abdeckung 13 auf. Die Abdeckung 13 liegt mit einem daran angeformten Abschlussflansch 138 am Gehäuse 11 an. Seitlich sind an der Abdeckung 13 Rastnasen 137 angeformt, welche in korrespondierende Montageöffnungen 117 am Gehäuse 11 eingreifen und darin lösbar verrastet werden können. Die Abdeckung 13 ist vom Gehäuse 11 lösbar. Dies ist insbesondere für die Verkabelung und Kontaktierung der durch den Steckverbinder 1 durchgeführten elektrischen Leitungen vorteilhaft.

Am Gehäuse 11 des zweiten Steckverbindermoduls 1B sind seitlich hülsenförmige erste Verriegelungselemente 116, 116' angeformt. In diesen sind die zweiten Verriegelungselemente 126, 126' verrastbar. Durch die Verriegelungselemente 116, 116', 126, 126' sind das erste Steckverbindermodul 1A und das zweite Steckverbindermodul 1B mechanisch stabil miteinander verbindbar. Die Verbindung ist nur durch ein Werkzeug lösbar und kann insbesondere nicht durch äussere Einflüsse wie Vibrationen oder Wind ungewollt gelöst werden.

Die Verbindungsleitungen 2A, 2B, 2C, 2D werden gruppiert als Anschlusskabel 2 durch eine Kabelverschraubung 8 aus dem zweiten Steckverbindermodul 1B hinausgeführt.

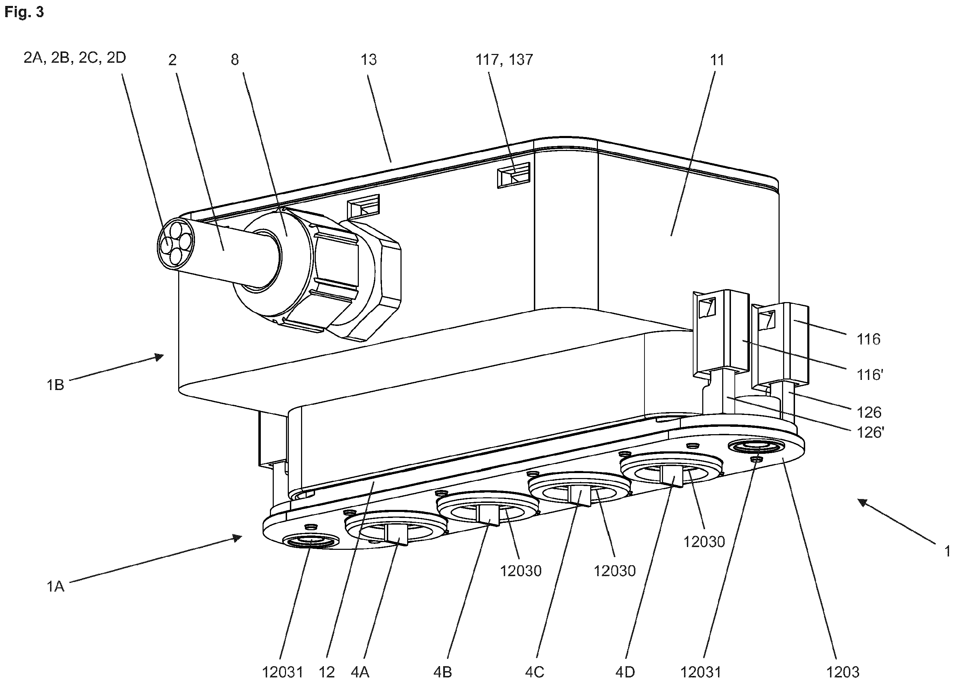

Fig. 3 zeigt den Steckverbinder 1 von Fig. 2 in einer weiteren Ansicht. Zusätzlich zu den in Fig. 2 gezeigten und beschriebenen Bestandteilen sind die Durchführungsöffnungen 12030 am Montageflansch 1203 des ersten Steckverbindermoduls 1A sichtbar. Durch jede Durchführungsöffnung 12030 ist jeweils ein Buchsenkontakt 4A, 4B, 4C, 4D geführt. Die Buchsenkontakte 4A, 4B, 4C, 4D sind einerseits mit den Anschlüssen SA, SB, SC, SD des zugehörigen Sektors S11, S12, S13; S21, S22, S23;...;Sn1, Sn2, Sn3 verbunden oder verbindbar und andererseits im Inneren des Steckverbinders 1 kontaktierend mit den entsprechenden Steckerkontakten 3A, 3B, 3C, 3D des zweiten Steckverbindermoduls 1B verbunden. Die Steckerkontakte 3A, 3B, 3C, 3D sind zudem mit den Verbindungsleitungen 2A, 2B, 2C, 2D elektrisch leitend verbunden.

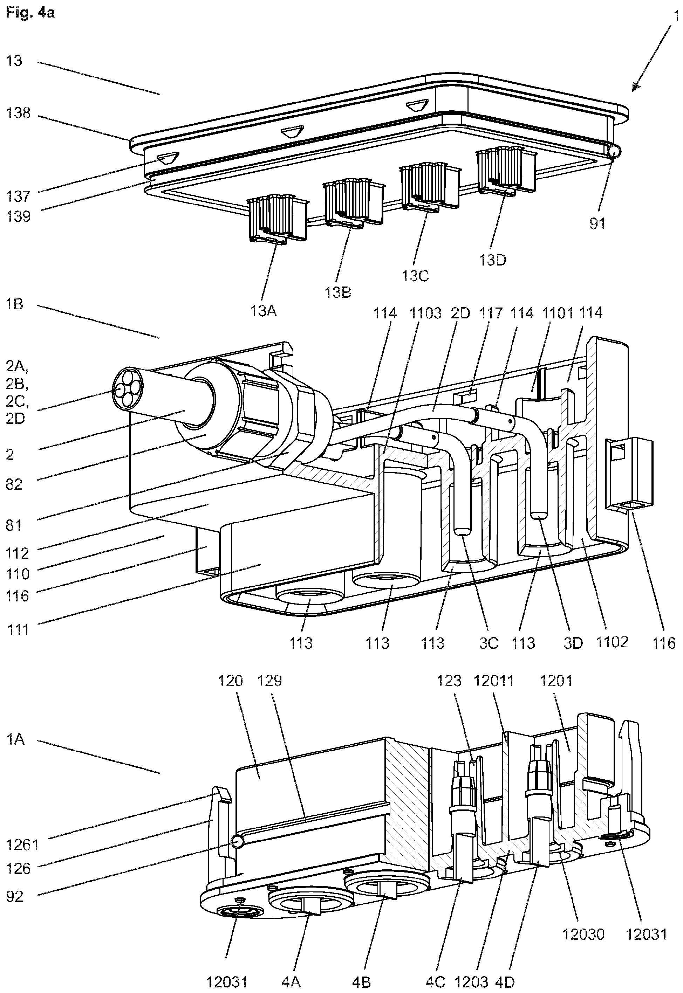

Fig. 4a zeigt den Steckverbinder 1 von Fig. 2 in einer Explosionsdarstellung mit teilweise geschnittenen Steckverbindermodulen 1A, 1B. Das zweite Steckverbindermodul 1B umfasst ein Gehäuse 11, welches durch eine Abdeckung 13 mediendicht verschliessbar ist. An der Abdeckung 13 ist ein umlaufender Abschlussflansch 138 angeformt. Seitlich sind an der Abdeckung 13 mehrere Rastnasen 137 angeordnet. Eine umlaufende erste Umlaufnut 139 ist zur Aufnahme der ersten Dichtung 91, vorzugsweise eine Gummidichtung mit zumindest annähernd rundem Querschnitt, geeignet. Durch die erste Dichtung 91 können Abdeckung 13 und Gehäuse 11 dicht miteinander verbunden werden. Auf der dem Gehäuse 11 zugewandten Seite der Abdeckung 13 sind Führungselemente 13A, 13B, 13C, 13D angeformt.

Am Gehäuse 11 sind beidseitig erste Verriegelungselemente 116 angeformt. Am Gehäuse 11 ist eine Kabelverschraubung 8 montiert, durch welche die Verbindungsleitungen 2A, 2B, 2C, 2D als Anschlusskabel 2 hinausgeführt sind. Das Gehäuse 11 geht einstückig in eine Trennwand 1103 über, durch welche ein Aufnahmeraum 1101 und ein erster Anschlussraum 1102 getrennt werden. Im Aufnahmeraum 1101 sind die Verbindungsleitungen 2A, 2B, 2C, 2D jeweils zu einem korrespondierenden Steckerkontakt 3A, 3B, 3C, 3D geführt und damit elektrisch leitend verbunden. Die Verbindungsleitungen 2A, 2B, 2C, 2D sind vorzugsweise durch eine elektrisch isolierende Schicht umfasst, so dass keine Kurzschlüsse entstehen können. Zur elektrischen Isolation des Luftraums zwischen den Steckerkontakten 3A, 3B, 3C, 3D, zur Erhöhung der Kriechstrecken und zur optimierten Führung der Steckerkontakte 3A, 3B, 3C, 3D sind im Aufnahmeraum 1101 zu jedem Steckerkontakt 3A, 3B, 3C, 3D korrespondierende Führungskrägen 114, welche in Richtung der Kabelverschraubung 8 geöffnet sind, an der Trennwand 1103 angeformt. Im ersten Anschlussraum 1102 ist an der Trennwand 1103 für jeden Steckerkontakt 3A, 3B, 3C, 3D jeweils ein Isolierkragen 113 angeformt. Die Isolierkrägen 113 sind vorzugsweise hohlzylindrisch ausgeführt.

Das erste Steckverbindermodul 1A umfasst ein Gehäuse 12 mit beidseitig daran angeformten zweiten Verriegelungselementen 126. Am Verriegelungselement 126 ist endseitig in Richtung des zweiten Steckverbindermoduls 1B ein Rasthaken 1261 angeformt. An der Aussenseite des Gehäuses 12 ist eine umlaufende Nut 129 eingeformt, in welcher eine zweite Dichtung 92 angeordnet ist. Durch diese zweite Dichtung 92 sind das erste Steckverbindermodul 1A und das zweite Steckverbindermodul 1B dicht miteinander verbindbar. Das Gehäuse 12 geht im Inneren einstückig in Trennwände 12011 über, wodurch zweite Anschlussräume 1201 aufgespannt werden. In jedem Anschlussraum 1201 sind korbförmig ausgestaltete Lamellen 123 am Gehäuse 12 angeformt. Die Lamellen 123 dienen zur Aufnahme und Fixierung der Buchsenkontakte 4A, 4B, 4C, 4D, welche jeweils durch eine korrespondierende Durchführungsöffnung 12030 von ausserhalb des ersten Steckverbindermoduls 1A elektrisch kontaktierbar sind.

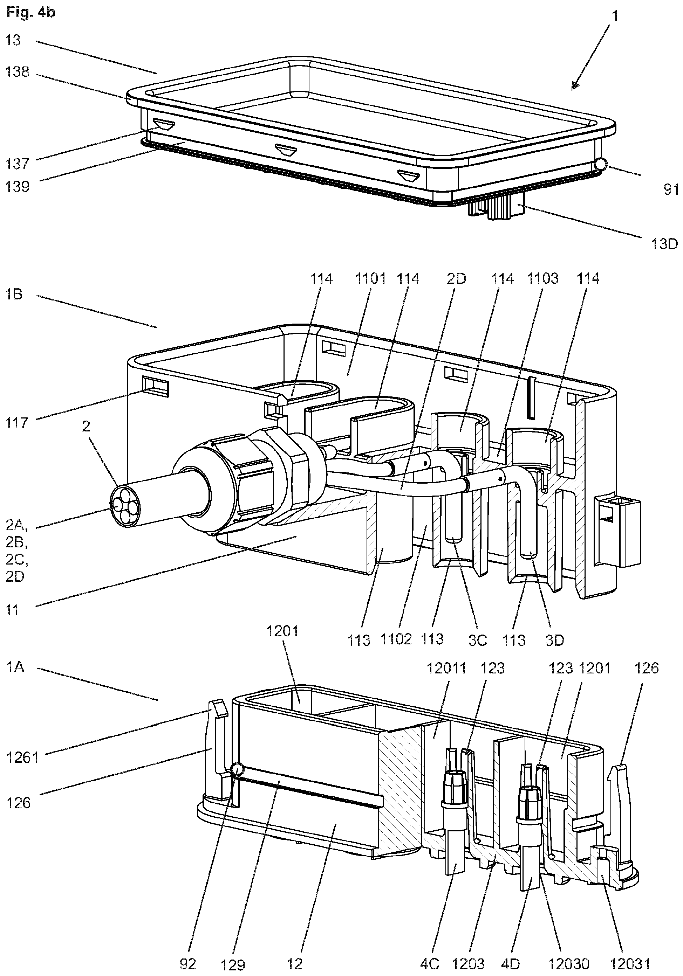

Fig. 4b zeigt den Steckverbinder 1 von Fig. 4a in einer weiteren Ansicht mit den aus Fig. 3 bekannten und darin beschriebenen Bestandteilen.

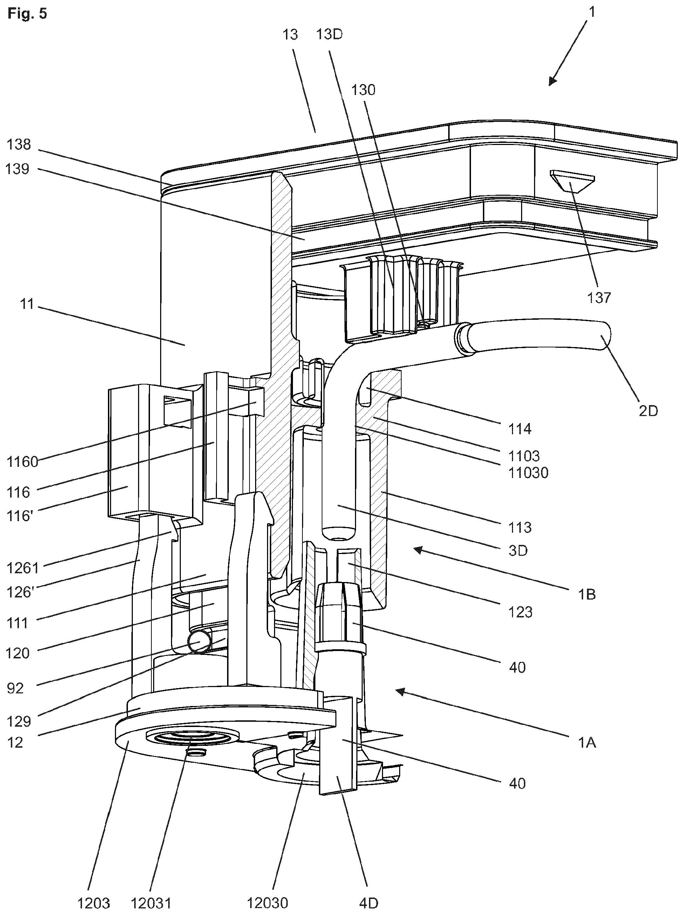

Fig. 5 zeigt einen Ausschnitt eines Steckverbinders 1 in einer teilweise geschnittenen Ansicht. Die Abdeckung 13 ist über die Rastnasen 137 mit dem Gehäuse 11 verbunden. Am Gehäuse 11 sind erste Verriegelungselemente 116, 116' angeformt. Im Inneren der Verriegelungselemente 116, 116' ist ein Verrastungsflansch eingeformt, in welchem der Rasthaken 1261 verriegelbar ist. Die Trennwand 1103 weist eine Durchführöffnung 11030, durch welche der Steckerkontakt 3D in den Isolierkragen 113 durchgeführt ist, auf. Der Steckerkontakt 3D ist durch das Führungselement 13D an der Abdeckung 13 geführt und zumindest teilweise fixiert.

Der Buchsenkontakt 4D ist als Buchsen-Lamellen-Kontakt ausgestaltet mit einem Ende als Buchse 40 und einem Ende als Kontaktlamelle 41. Die Kontaktlamelle 41 ist durch eine Durchführöffnung 12030 durch den Montageflansch 1203 durchgeführt und von aussen elektrisch kontaktierbar und anschliessbar.

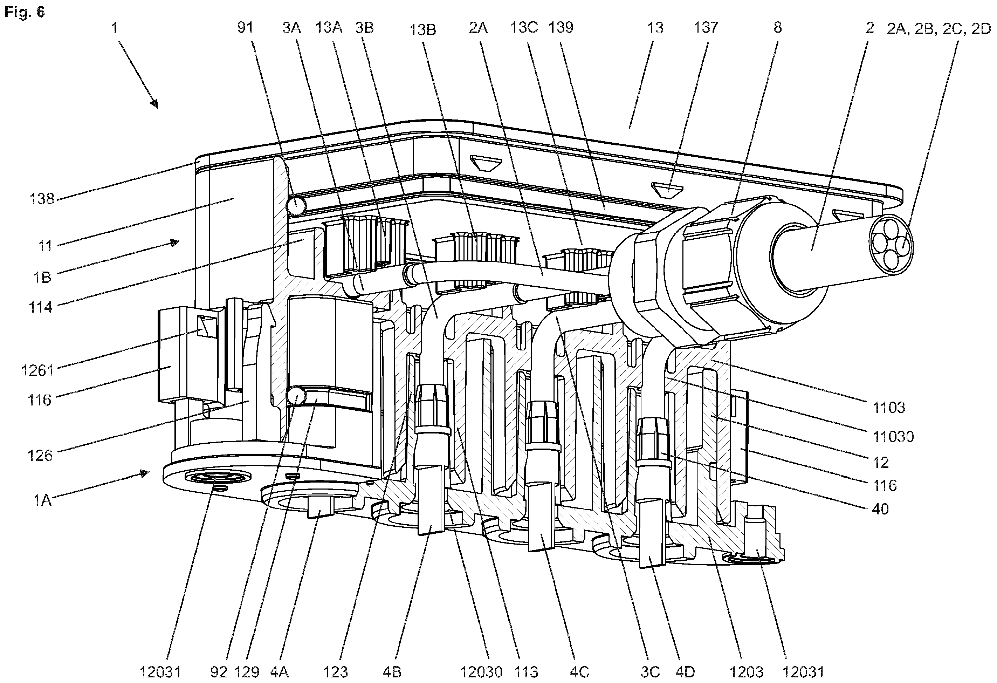

Fig. 6 zeigt den Steckverbinder 1 von Fig. 2 in einer teilweise geschnittenen Ansicht. Das erste Steckverbindermodul 1A ist mit dem zweiten Steckverbindermodul 1B über die Verriegelungselemente 116, 126 verriegelt. Im verriegelten Zustand sind auch die elektrischen Kontakte im Inneren des Steckverbinders elektrisch leitend miteinander verbunden. Die Buchsenkontakte 4A, 4B, 4C, 4D sind jeweils durch eine Durchführungsöffnung 12030 in das Gehäuse 12 des ersten Steckverbindermoduls 1A eingeführt und weisen auf dem der Durchführungsöffnung 12030 abgewandten Ende jeweils eine Buchse 40 auf. In die Buchse 40 ist ein jeweils korrespondierender Steckerkontakt 3A, 3B, 3C, 3D eingesteckt, wodurch ein elektrisch leitender Kontakt hergestellt ist. Der Steckerkontakt 3A, 3B, 3C, 3D weist eine gewinkelte Form auf und wird durch eine Durchführöffnung 11030 durch die Trennwand 1103 in Richtung der Führungskrägen 114geführt. Die Führungselemente 13A, 13B, 13C, 13D greifen teilweise in die Führungskrägen 114 ein, wodurch die Steckerkontakte 3A, 3B, 3C, 3D mechanisch fixiert und geführt werden. Die Führungselemente 13A, 13B, 13C, 13D sind in der gezeigten bevorzugten Ausgestaltung so ausgestaltet, dass sie eine nutartige Form zur Aufnahme der Steckerkontakte 3A, 3B, 3C, 3D ausbilden. Die Führungselemente 13A, 13B, 13C, 13D führen die Steckerkontakte 3A, 3B, 3C, 3D voneinander beabstandet zu den entsprechenden Verbindungsleitungen 2A, 2B, 2C, 2D, mit denen die jeweiligen Steckerkontakte 3A, 3B, 3C, 3D unterbruchsfrei elektrisch leitend verbunden sind.

Es besteht somit eine durchgehende elektrisch leitende Verbindung zwischen den Buchsenkontakten 4A, 4B, 4C, 4D und den entsprechenden Verbindungsleitungen 2A, 2B, 2C, 2D über die entsprechenden Steckerkontakte 3A, 3B, 3C, 3D.

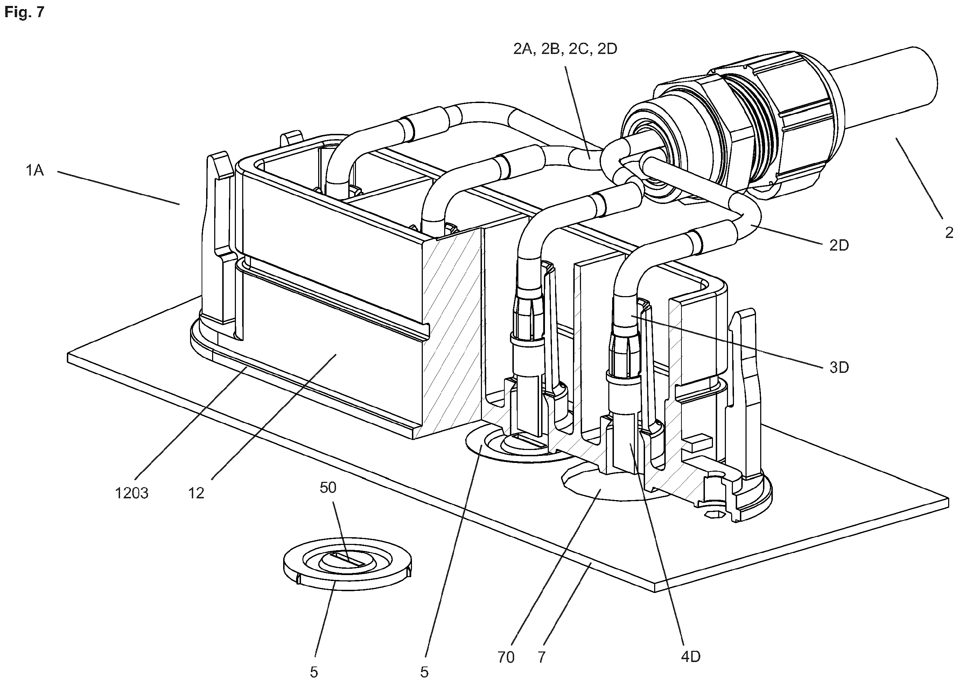

Fig. 7 zeigt ein erstes Steckverbindermodul 1A an einer Montageplatte 7 mit Montageöffnungen 70 und einer separat dargestellten Dichtung 5. Das Steckverbindermodul 1A liegt mit dem am Gehäuse 12 angeformten Montageflansch 1203 bündig an der Montageplatte 7 an. Die Montageplatte 7 weist mehrere Montageöffnungen 70 auf, welche zur Durchführung der Buchsenkontakte 4A, 4B, 4C, 4D oder der entsprechenden Anschlusskontakte SA, SB, SC, SD des Photovoltaikmoduls P1 geeignet sind. In die Montageöffnungen 70 sind Durchführungen 5 einsetzbar. Die Durchführungen 5 weisen eine Durchführöffnung 50 zur Durchführung der Buchsenkontakte 4A, 4B, 4C, 4D oder der entsprechenden Anschlusskontakte SA, SB, SC, SD auf.

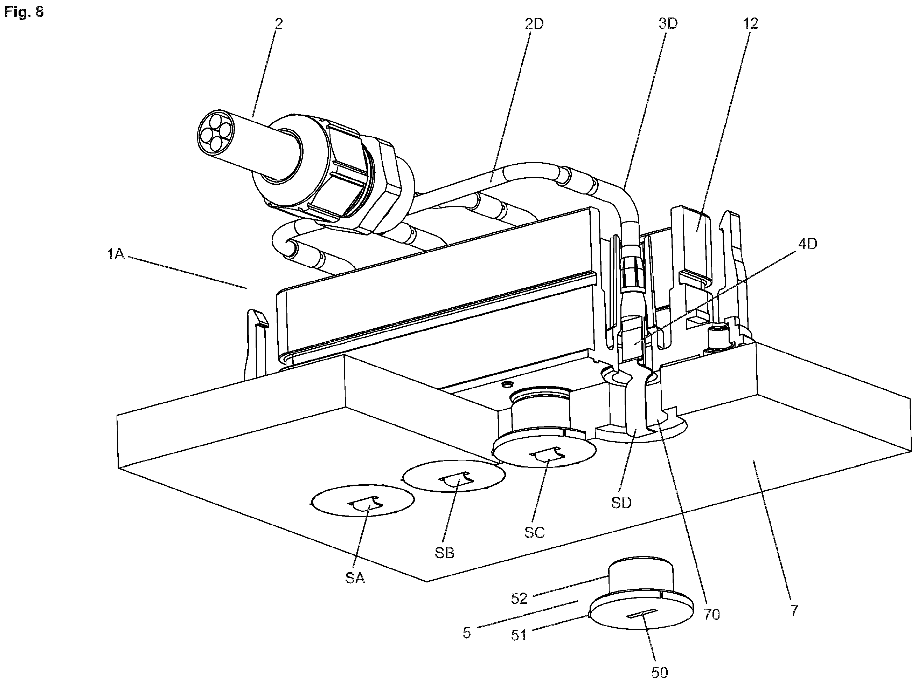

Fig. 8 zeigt ein erstes Steckverbindermodul 1A an einer Montageplatte 7 mit Montageöffnungen 70 und darin eingesetzten Durchführungen 5 sowie einer separat dargestellten Durchführung 5, die aus einer Montageöffnung 70 der Montageplatte 7 entnommen wurde. Die Durchführung 5 weist eine axial ausgerichtete durchgängige Durchführöffnung 50 auf. Die Durchführung 5 umfasst einen Dichtflansch 51, welcher in eine entsprechende Aussparung in der Durchführungsöffnung 70 einsetzbar ist, und einen Dichtkragen 52. Der Durchmesser des Dichtkragens 52 ist vorzugsweise auf den Durchmesser der Durchführungsöffnung 70 angepasst. Durch die Durchführöffnungen 50 in den Durchführungen 5 in den Montageöffnungen 70 sind jeweils Anschlusskontakte SA, SB, SC, SD durchgeführt. Die Anschlusskontakte SA, SB, SC, SD erlauben die elektrische Kontaktierung, beispielsweise eines Busbar oder eine Leiterschiene eines Photovoltaikmoduls auf der dem ersten Steckverbindermodul 1A gegenüberliegenden Seite der Montageplatte 7. Die Anschlusskontakte SA, SB, SC, SD sind jeweils elektrisch leitend mit dem entsprechenden Buchsenkontakt 4A, 4B, 4C, 4D verbunden.

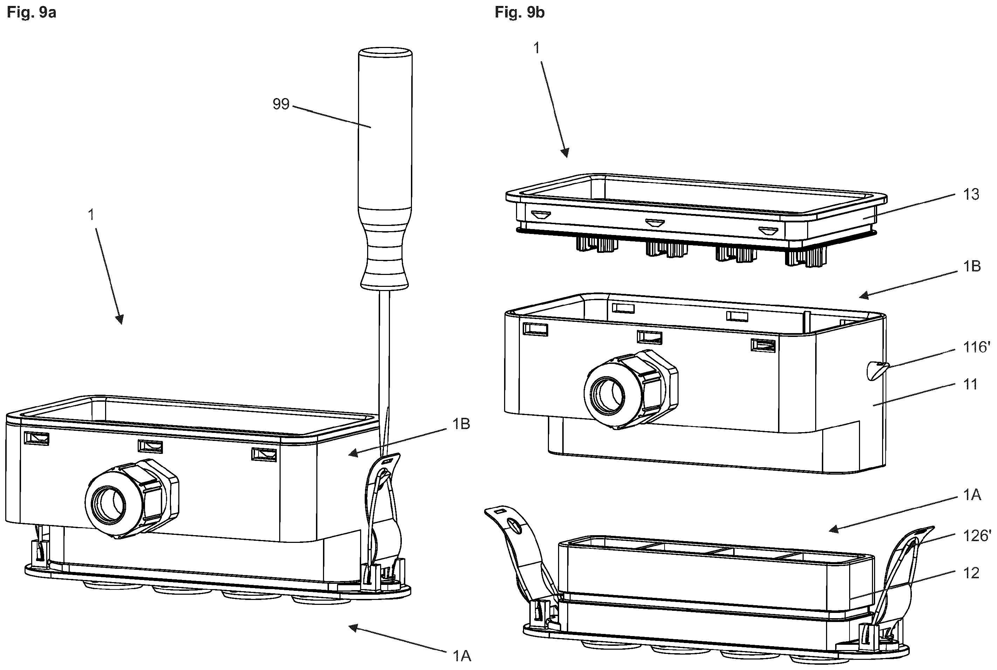

Fig. 9a zeigt eine zweite Ausgestaltung eines erfindungsgemässen Steckverbinders 1 mit einem Werkzeug 99. Das Werkzeug 99 ist zur Entriegelung der Verriegelungselemente einsetzbar.

Fig. 9b zeigt den Steckverbinder 1 aus Fig. 9a in einer Explosionsdarstellung. In der gezeigten Ausgestaltung sind die ersten Verriegelungselemente 116' am Gehäuse 11 des zweiten Steckverbindermoduls 1B als Rastvorsprünge ausgestaltet. Am ersten Steckverbindermodul 1A sind mit dem Gehäuse 12 verbundene erste Verriegelungselemente 126' seitlich angeordnet. Die ersten Verriegelungselemente 126' sind als elastische Verriegelungsbügel ausgestaltet. Jeder Verriegelungsbügel kann den zugehörigen Rastvorsprung 116, 116' hintergreifen, womit das erste Steckverbindermodul 1A und das zweite Steckverbindermodul 1B stabil und mit einem Werkzeug 99 lösbar miteinander verriegelt werden.

### Bezugszeichenliste

- 10: Photovoltaiksystem
- 1: Steckverbinder
- 1A: erstes Steckverbindermodul
- 1B: zweites Steckverbindermodul
- 11: Gehäuse des zweiten Steckverbindermoduls
- 1101: Aufnahmeraum
- 1102: erster Anschlussraum
- 1103: Trennwand
- 11030: Durchführöffnung
- 113: Isolierkrägen
- 114: Führungskrägen
- 116, 116': zweite Verriegelungselemente
- 1160: Verrastungsflansch, Rastsenke
- 117: Montageöffnung
- 12: Gehäuse des ersten Steckverbindermoduls
- 1201: zweiter Anschlussraum
- 12011: Trennwand
- 1203: Montageflansch
- 12030: Durchführungsöffnung
- 12031: Befestigungsöffnung
- 123: Lamellen
- 126, 126': erste Verriegelungselemente
- 1261: Rasthaken
- 129: zweite Umlaufnut
- 13: Abdeckung
- 137: Rastnasen
- 138: Abschlussflansch
- 139: erste Umlaufnut
- 13A, 13B, 13C, 13D: Führungselemente
- 2: Anschlusskabel
- 20: Kabelmantel
- 2A, 2B, 2C, 2D: Verbindungsleitungen
- 3A, 3B, 3C, 3D: Steckverbinderkontakte, Steckerkontakte
- 4A, 4B, 4C, 4D: Steckverbinderkontakte, Buchsenkontakte
- 40: Buchse
- 41: Kontaktlamelle
- 5: Durchführung
- 50: Durchführöffnung
- 51: Dichtflansch
- 52: Dichtkragen
- 6: Schaltschrank
- 60: Überwachungsvorrichtung
- 61: Sammelleitung
- 7: Montageplatte
- 70: Durchführungsöffnung
- 8: Kabelverschraubung
- 91: erste Dichtung
- 92: zweite Dichtung
- 99: Werkzeug
- A, B, C, D: elektrische Verbindungen
- P1, P2,..., Pn: Photovoltaikmodule
- S11, S12, S13; S21, S22, S23;...; Sn1, Sn2, Sn3: Sektoren je eines Photovoltaikmoduls
- SA, SB, SC, SD: Anschlusskontakte
- D1, D2,..., Dn: Diodenarrays
- D11, D12, D13; D21, D22, D23;...; Dn1, Dn2, Dn3: Bypassdioden je eines Diodenarrays

## Patentansprüche

1. Photovoltaiksystem (10) mit wenigstens einem Photovoltaikmodul (P1, P2,..., Pn), das durch Steckverbinderkontakte (3A, 3B, 3C, 3D; 4A, 4B, 4C, 4D) von zwei miteinander verbundenen Steckverbindermodulen (1A, 1B) eines Steckverbinders (1, ..., 1n) und durch Verbindungsleitungen (2A, 2B, 2C, 2D) mit einem Schaltschrank (6) verbunden ist und das mehrere Sektoren (S11, S12, S13) mit je wenigstens einer Photovoltaikzelle aufweist, welche Sektoren (S11, S12, S13) in Serie zueinander geschaltet und mit ihren elektrischen Anschlüssen (SA, SB; SB, SC; SC, SD) derart mit Anschlüssen (DA, DB; DB, DC; DC, DD) von Bypassdioden (D11; D12; D13) eines zugehörigen Diodenarrays (D1; D2; ...; Dn) verbunden sind, dass die Bypassdioden (D11; D12; D13) des zugehörigen Diodenarrays (D1; D2; ...; Dn) in Serie zueinander geschaltet sind und jede dieser Bypassdioden (D11; D12; D13) einem der Sektoren (S11; S12; S13) zugeordnet und bezüglich dieses Sektors (S11; S12; S13) in Sperrrichtung geschaltet ist, **dadurch gekennzeichnet, dass** die Anschlüsse (SA, SB; SB, SC; SC, SD) der Sektoren (S11, S12, S13) des wenigsten einen Photovoltaikmoduls (P1, P2,...,Pn) durch den Steckverbinder (1) und die Verbindungsleitungen (2A, 2B, 2C, 2D) mit den im Schaltschrank (6) angeordneten Bypassdioden (D11; D12; D13) des zugehörigen Diodenarrays (D1; D2; ...; Dn) verbunden sind.

2. Photovoltaiksystem (10) nach Anspruch 1, **dadurch gekennzeichnet, dass** das Photovoltaiksystem (10) mehrere Photovoltaikmodule (P1, P2,...,Pn) umfasst, die je durch ein Steckverbinder (1, ...; 1n) und zugehörige Verbindungsleitungen (2A, 2B, 2C, 2D) mit einem Diodenarray (D1; D2; ...; Dn) verbunden ist, das im Schaltschrank (6) angeordnet ist.

3. Photovoltaiksystem (10) nach Anspruch 1 oder 2, **dadurch gekennzeichnet, dass** die Verbindungsleitungen (2A, 2B, 2C, 2D), die je einen der Steckverbinder (1, ...; 1n) mit einem gehörigen Diodenarray (D1; D2; ...; Dn) verbinden, ummantelt und zu einem einzelnen Anschlusskabel (2) gruppiert sind.

4. Photovoltaiksystem (10) nach einem der Ansprüche 1 - 3, **dadurch gekennzeichnet, dass** die Steckverbinderkontakte (3A, 3B, 3C, 3D; 4A, 4B, 4C, 4D) des Steckverbinders 1, ..., 1n); und die Verbindungsleitungen (2A, 2B, 2C, 2D), und die Anschlüsse (DA, DB; DB, DC; DC, DD) der Bypassdioden (D11; D12; D13) des zugehörigen Diodenarrays (D1; D2; ...; Dn), die zueinander korrespondieren, individuell codiert sind, wobei im Bereich der Steckverbinderkontakte (3A, 3B, 3C, 3D; 4A, 4B, 4C, 4D), an den Verbindungsleitungen (2A, 2B, 2C, 2D) und im Bereich der Anschlüsse (DA, DB; DB, DC; DC, DD) der Bypassdioden (D11; D12; D13) entsprechende Markierungen (A, B, C, D) vorgesehen sind.

5. Photovoltaiksystem (10) nach einem der Ansprüche 1 - 3, **dadurch gekennzeichnet, dass** die Bypassdioden (D11, D12, D13, D21, D22, D32,..., Dn1, Dn2, Dn3) oder die Diodenarrays (D1, D2, ...,Dn) mit den Bypassdioden (D11, D12, D13, D21, D22, D32,..., Dn1, Dn2, Dn3), die in einem Bauteil integriert sind, einzeln austauschbar sind.

6. Photovoltaiksystem (10) nach einem der Ansprüche 1 - 5, **dadurch gekennzeichnet, dass** zwischen dem wenigstens einen Photovoltaikmodul (P1, P2, ...,Pn) und dem zugehörigen Steckverbinder (1, ..., 1n) eine Montageplatte (7) angeordnet ist, auf welcher die Photovoltaikmodule (P1, P2, ..., Pn) oder die Photovoltaikmodule (P1, P2, ..., Pn) und das erste Steckverbindermodul (1A) anbringbar sind, und/oder, dass zumindest ein Photovoltaikmodul (P1, P2,...,Pn) ein fassadenintegriertes Photovoltaikmodul ist.

7. Photovoltaiksystem (10) nach Anspruch 6, **dadurch gekennzeichnet, dass** die Montageplatte (7) Montageöffnungen (70) zur Durchführung der elektrischen Verbindungen (SA, SB, SC, SD) aufweist, wobei in die Montageöffnungen (70) jeweils eine Durchführung (5), zur Abdichtung der durchgeführten elektrischen Verbindung (SA, SB, SC, SD)) eingesetzt ist und/oder dass die elektrischen Verbindungen (SA, SB, SC, SD) im Bereich der Montageöffnungen (70) jeweils als Anschlusskontakte zur elektrischen Kontaktierung eines Busbar oder einer Sammelleitung ausgestaltet sind.

8. Photovoltaiksystem (10) nach Anspruch 6 oder 7, **dadurch gekennzeichnet, dass** das Gehäuse (11) des ersten Steckverbindermoduls (1A) und das Gehäuse (12) des zweiten Steckverbindermoduls (1B) und die Montageplatte (7) aus Materialien mit ähnlichen thermischen Ausdehnungskoeffizienten gefertigt sind und/oder dass das Gehäuse (11) des ersten Steckverbindermoduls (1A) und das Gehäuse (12) des zweiten Steckverbindermoduls (1B) und die Durchführung (5) aus Materialien mit ähnlichen thermischen Ausdehnungskoeffizienten gefertigt sind und/oder dass die Montageplatte (7) und die Durchführung (5) aus Materialien mit ähnlichen thermischen Ausdehnungskoeffizienten gefertigt sind und/oder dass die Durchführung (5) so ausgestaltet ist, dass sie mechanische Spannungen aufgrund von unterschiedlicher thermischer Ausdehnung ausgleichen kann.

9. Photovoltaiksystem (10) nach einem der Ansprüche 1 - 8, **dadurch gekennzeichnet, dass** eine Überwachungsvorrichtung (60) zur Überwachung des Photovoltaiksystems (10) vorgesehen ist, mittels der die Spannungen an den Anschlüssen (DA, DB; DB, DC; DC, DD) der Bypassdioden (D11; D12; D13) messbar und auswertbar sind und eine Unregelmässigkeit oder Fehlfunktion insbesondere eine Fehlfunktion einer der Bypassdioden (D11, D12, D13, D21, D22, D32,..., Dn1, Dn2, Dn3), erkennbar und vorzugsweise signalisierbar ist.

10. Verfahren zur Überwachung eines Photovoltaiksystems (10) nach einem der Ansprüche 1 - 9, **dadurch gekennzeichnet, dass** eine Überwachungsvorrichtung (60) vorgesehen ist, mittels der die Spannungen an den Anschlüssen (DA, DB; DB, DC; DC, DD) der Bypassdioden (D11; D12; D13) messbar und auswertbar sind und eine Unregelmässigkeit oder Fehlfunktion des Photovoltaiksystems (10), insbesondere eine Fehlfunktion einer der Bypassdioden (D11, D12, D13, D21, D22, D32,..., Dn1, Dn2, Dn3), erkennbar und vorzugsweise signalisierbar ist.

11. Verfahren nach Anspruch 10, **dadurch gekennzeichnet, dass** die Spannungen an den Anschlüssen (DA, DB; DB, DC; DC, DD) der Bypassdioden (D11; D12; D13) und/oder die zeitlichen Verläufe der Spannungen an den Anschlüssen (DA, DB; DB, DC; DC, DD) der Bypassdioden (D11; D12; D13) gemessen und ausgewertet werden, wobei vorzugsweise Messwerte untereinander oder mit Sollwerten verglichen werden, um elektrische Unterbrüche oder Defekte der Bypassdioden (D11; D12; D13) oder langfristige Abschattungen festzustellen.

12. Steckverbinder (1) für ein Photovoltaiksystem (10) nach einem der Ansprüche 1-11 mit zwei Steckverbindermodulen (1A, 1B), die zueinander korrespondierende Steckverbinderkontakte (3A, 3B, 3C, 3D; 4A, 4B, 4C, 4D) aufweisen, zur elektrisch isolierten Verbindung von Anschlüssen (SA, SB; SB, SC; SC, SD) eines Photovoltaikmoduls (P1, P2,..., Pn) mit Verbindungsleitungen (2A, 2B, 2C, 2D).

13. Steckverbinder (1) nach Anspruch 12, **dadurch gekennzeichnet, dass** das erste Steckverbindermodul (1A) seitlich angeordnete erste elastische Verriegelungselemente (126, 116') aufweist, die stabförmig ausgebildet und mit einem ersten Rastelement (1261) versehen sind, und dass das zweite Steckverbindermodul (1B) zu den ersten Verriegelungselementen (116, 116') korrespondierende seitlich angeordnete zweite Verriegelungselemente (126, 126') aufweist, die hülsenförmig ausgestaltet sind und ein zweites Rastelement (1160), das zum ersten Rastelement (1261) korrespondiert, aufweisen, so dass das erste Steckverbindermodul (1A) mit dem zweiten Steckverbindermodul (1B) durch Verriegelung der ersten Verriegelungselemente (116, 116') mit den zweiten Verriegelungselementen (126, 126') lösbar verbindbar ist.

14. Steckverbinder (1) nach Anspruch 12 oder 13, **dadurch gekennzeichnet, dass** das erste Steckverbindermodul (1A) am Gehäuse (12) einen Montageflansch (1203) aufweist, an welchem das erste Steckverbindermodul (1A) an einer Montageplatte (7) anbringbar ist.

15. Steckverbinder (1) nach Anspruch 14, **dadurch gekennzeichnet, dass** das erste Steckverbindermodul (1A) durch Lamination oder Verkleben an der Montageplatte (7) anbringbar ist.

## Claims

1. Photovoltaic system (10) with at least one photovoltaic module (P1, P2, ..., Pn), which is connected by plug connector contacts (3A, 3B, 3C, 3D; 4A, 4B, 4C, 4D) of two interconnected plug connector modules (1A, 1B) of a plug connector (1, ..., 1n) and by connecting lines (2A, 2B, 2C, 2D) to an electrical cabinet (6) and which has several sectors (S11, S12, S13), each comprising at least one photovoltaic cell, which sectors (S11, S12, S13) are connected in series with each other and are connected with their electrical terminals (SA, SB; SB, SC; SC, SD) to terminals (DA, DB; DB, DC; DC, DD) of bypass diodes (D11; D12; D13) of an associated diode array (D1; D2; ...; Dn) in such a way that the bypass diodes (D11; D12; D13) of the associated diode array (D1; D2; ...; Dn) are connected in series with each other and each of these bypass diodes (D11; D12; D13) is assigned to one of the sectors (S11; S12; S13) and is connected in the reverse direction with respect to this sector (S11; S12; S13), **characterized in that** the terminals (SA, SB; SB, SC; SC, SD) of the sectors (S11, S12, S13) of the at least one photovoltaic module (P1, P2,..,Pn) are connected by the plug connector (1) and the connecting lines (2A, 2B, 2C, 2D) to the bypass diodes (D11; D12; D13) of the associated diode array (D1; D2; ...; Dn) arranged in the electrical cabinet (6).

2. Photovoltaic system (10) according to claim 1, **characterised in that** the photovoltaic system (10) comprises a plurality of photovoltaic modules (P1, P2, ..., Pn), which are each connected by a plug connector (1, ..., 1n) and associated connecting lines (2A, 2B, 2C, 2D) to a diode array (D1; D2; ...; Dn) arranged in the electrical cabinet (6).

3. Photovoltaic system (10) according to claim 1 or 2, **characterised in that** the connecting lines (2A, 2B, 2C, 2D), which each connect one of the plug connectors (1, ...; 1n) to a corresponding diode array (D1; D2; ...; Dn), are sheathed and grouped together to form a single connecting cable (2).

4. Photovoltaic system (10) according to one of the claims 1 - 3, **characterized in that** the plug connector contacts (3A, 3B, 3C, 3D; 4A, 4B, 4C, 4D) of the plug connector (1, ..., 1n); and the connecting lines (2A, 2B, 2C, 2D), and the terminals (DA, DB; DB, DC; DC, DD) of the bypass diodes (D11; D12; D13) of the associated diode array (D1; D2; ...; Dn), which correspond to each other, are individually coded, wherein in the region of the plug connector contacts (3A, 3B, 3C, 3D; 4A, 4B, 4C, 4D), on the connecting lines (2A, 2B, 2C, 2D) and in the area of the terminals (DA, DB; DB, DC; DC, DD) of the bypass diodes (D11; D12; D13) corresponding markings (A, B, C, D) are provided.

5. Photovoltaic system (10) according to one of claims 1 - 3, **characterised in that** the bypass diodes (D11, D12, D13, D21, D22, D32,..., Dn1, Dn2, Dn3) or the diode array (D1, D2, ...,Dn) with the bypass diodes (D11, D12, D13, D21, D22, D32,..., Dn1, Dn2, Dn3), which are integrated in a component, are individually replaceable.

6. Photovoltaic system (10) according to one of the claims 1 - 5, **characterized in that** between the at least one photovoltaic module (P1, P2, ...,Pn) and the associated plug connector (1, ..., 1n) there is a mounting plate (7) on which the photovoltaic modules (P1, P2, ..., Pn) or the photovoltaic modules (P1, P2, ..., Pn) and the first connector module (1A) can be mounted, and/or that at least one photovoltaic module (P1, P2, ..., Pn) is a facade-integrated photovoltaic module.

7. Photovoltaic system (10) according to claim 6, **characterised in that** the mounting plate (7) has mounting openings (70) for feeding through the electrical connections (SA, SB, SC, SD), wherein a feed-through (5) is inserted into each of the mounting openings (70) for sealing the electrical connection (SA, SB, SC, SD) passed through and/or that the electrical connections (SA, SB, SC, SD) in the area of the mounting openings (70) are each designed as connection contacts for electrically contacting a busbar or a collecting line.

8. Photovoltaic system (10) according to claim 6 or 7, **characterized in that** the housing (11) of the first connector module (1A) and the housing (12) of the second connector module (1B) and the mounting plate (7) are made of materials with similar thermal expansion coefficients and/or that the housing (11) of the first connector module (1A) and the housing (12) of the second connector module (1B) and the feedthrough (5) are made of materials with similar thermal expansion coefficients and/or that the mounting plate (7) and the feedthrough (5) are made of materials with similar thermal expansion coefficients and/or that the feedthrough (5) is designed so that it can compensate for mechanical stresses due to different thermal expansion.

9. Photovoltaic system (10) according to one of the claims 1 - 8, **characterized in that** a monitoring device (60) is provided for monitoring the photovoltaic system (10), by means of which monitoring device (60) the voltages at the terminals (DA, DB; DB, DC; DC, DD) of the bypass diodes (D11; D12; D13) can be measured and evaluated, and an irregularity or malfunction, in particular a malfunction of one of the bypass diodes (D11, D12, D13, D21, D22, D32,..., Dn1, Dn2, Dn3), can be detected and preferably signalled.

10. Method for monitoring a photovoltaic system (10) according to one of the claims 1 - 9, **characterised in that** a monitoring device (60) is provided, by means of which the voltages at the terminals (DA, DB; DB, DC; DC, DD) of the bypass diodes (D11; D12; D13) can be measured and evaluated and an irregularity or malfunction of the photovoltaic system (10), in particular a malfunction of one of the bypass diodes (D11, D12, D13, D21, D22, D32,..., Dn1, Dn2, Dn3), can be detected and preferably signalled.

11. Method according to claim 10, **characterised in that** the voltages at the terminals (DA, DB; DB, DC; DC, DD) of the bypass diodes (D11; D12; D13) and/or the time curves of the voltages at the terminals (DA, DB; DB, DC; DC, DD) of the bypass diodes (D11; D12; D13) are measured and evaluated, whereby measured values are preferably compared with each other or with target values in order to detect electrical interruptions or defects in the bypass diodes (D11; D12; D13) or long-term shading.

12. Plug connector (1) for a photovoltaic system (10) according to one of the claims 1-11, comprising two plug connector modules (1A, 1B) which have mutually corresponding plug connector contacts (3A, 3B, 3C, 3D; 4A, 4B, 4C, 4D) for the electrically insulated connection of terminals (SA, SB; SB, SC; SC, SD) of a photovoltaic module (P1, P2,..., Pn) with connecting lines (2A, 2B, 2C, 2D).

13. Plugable connector (1) according to claim 12, **characterised in that** the first connector module (1A) comprises laterally arranged first elastic locking elements (126, 116') which are rod-shaped and provided with a first latching element (1261), and that the second connector module (1B) comprises laterally arranged second locking elements (126, 126') corresponding to the first locking elements (116, 116'), which are designed in the form of sleeves and are provided with a second latching element (1160) which corresponds to the first locking element (1261), so that the first connector module (1A) can be detachably connected to the second connector module (1B) by locking the first locking elements (116, 116') with the second locking elements (126, 126').

14. Plug connector (1) according to claim 12 or 13, **characterised in that** the first connector module (1A) comprises a mounting flange (1203) on the housing (12), to which the first connector module (1A) can be attached on a mounting plate (7).

15. Plug connector (1) according to claim 14, **characterised in that** the first connector module (1A) is attachable to the mounting plate (7) by lamination or bonding.

## Revendications

1. Système photovoltaïque (10) comprenant au moins un module photovoltaïque (P1, P2,..., Pn) qui est relié par des contacts de connecteurs enfichables (3A, 3B, 3C, 3D; 4A, 4B, 4C, 4D) de deux modules de connecteurs enfichables (1A, 1B) reliés entre eux d'un connecteur enfichable (1, ..., 1n) et par des lignes de connexion (2A, 2B, 2C, 2D) à une armoire électrique (6) et qui comporte plusieurs secteurs (S11, S12, S13) comportant chacun au moins une cellule photovoltaïque, lesquels secteurs (S11, S12, S13) sont connectés en série les uns aux autres et sont reliés par leurs connexions électriques (SA, SB; SB, SC; SC, SD) aux terminaux (DA, DB; DB, DC; DC, DD) de diodes de dérivation (D11; D12; D13) d'un réseau de diodes associé (D1; D2; ...; Dn) de telle sorte que les diodes de dérivation (D11; D12; D13) du réseau de diodes associé (D1; D2; ...; Dn) sont connectées en série les unes avec les autres et chacune de ces diodes de dérivation (D11; D12; D13) est associée à l'un des secteurs (S11; S12; S13) et est connectée dans le sens inverse par rapport à ce secteur (S11; S12; S13), **caractérisé en ce que** les connexions électriques (SA, SB; SB, SC; SC, SD) des secteurs (S11, S12, S13) du au moins un module photovoltaïque (P1, P2,...,Pn) sont reliées par le connecteur enfichable (1) et les lignes de connexion (2A, 2B, 2C, 2D) aux diodes de dérivation (D11; D12; D13) du réseau de diodes (D1; D2; ...; Dn) associé, qui sont disposées dans l'armoire électrique (6).

2. Système photovoltaïque (10) selon la revendication 1, **caractérisé en ce que** le système photovoltaïque (10) comprend plusieurs modules photovoltaïques (P1, P2, ..., Pn) qui sont chacun reliés par un connecteur enfichable (1, ...; 1n) et des lignes de connexion associées (2A, 2B, 2C, 2D) à un réseau de diodes (D1; D2; ...; Dn) disposé dans l'armoire électrique (6).

3. Système photovoltaïque (10) selon la revendication 1 ou 2, **caractérisé en ce que** les lignes de connexion (2A, 2B, 2C, 2D), qui relient chacune l'un des connecteurs enfichables (1, ...; 1n) à un réseau de diodes (D1; D2; ...; Dn) correspondant, sont gainées et regroupées en un seul câble de connexion (2).

4. Système photovoltaïque (10) selon l'une des revendications 1 à 3, **caractérisé en ce que** les contacts des connecteurs enfichables (3A, 3B, 3C, 3D; 4A, 4B, 4C, 4D) du connecteur enfichable 1, ..., 1n); et les lignes de connexion (2A, 2B, 2C, 2D), et les terminaux (DA, DB; DB, DC; DC, DD) des diodes de dérivation (D11; D12; D13) du réseau de diodes associé (D1; D2; ...; Dn), qui correspondent les uns aux autres, sont codés individuellement, ou dans la zone des contacts des connecteurs enfichables (3A, 3B, 3C, 3D; 4A, 4B, 4C, 4D), sur les lignes de connexion (2A, 2B, 2C, 2D) et dans la zone des terminaux (DA, DB; DB, DC; DC, DD) des diodes de dérivation (D11; D12; D13) sont pourvus de marquages correspondants (A, B, C, D).

5. Système photovoltaïque (10) selon une des revendications 1 - 3, **caractérisé en ce que** les diodes de dérivation (D11, D12, D13, D21, D22, D32, ..., Dn1, Dn2, Dn3) ou les réseaux de diodes (D1, D2, ..., Dn) avec les diodes de dérivation (D11, D12, D13, D21, D22, D32, ..., Dn1, Dn2, Dn3), qui sont intégrées dans un composant, sont remplaçables individuellement.

6. Système photovoltaïque (10) selon une des revendications 1 - 5, **caractérisé en ce qu'**entre l'au moins un module photovoltaïque (P1, P2, ..., Pn) et le connecteur enfichable associé (1, ..., 1n) est disposée une plaque de montage (7) sur laquelle les modules photovoltaïques (P1, P2, ..., Pn) ou les modules photovoltaïques (P1, P2, ..., Pn) et le premier module de connecteur enfichable (1A) peuvent être montés, et/ou **en ce qu'**au moins un module photovoltaïque (P1, P2,...,Pn) est un module photovoltaïque intégré à la façade.

7. Système photovoltaïque (10) selon la revendication 6, **caractérisé en ce que** la plaque de montage (7) comporte des ouvertures de montage (70) pour le passage des connexions électriques (SA, SB, SC, SD), ou dans les ouvertures de montage (70) étant respectivement inséré un dispositif de passage (5) pour étanchéifier la connexion électrique (SA, SB, SC, SD) et/ou que les connexions électriques (SA, SB, SC, SD) sont conçues dans la zone des ouvertures de montage (70) respectivement comme des contacts de raccordement pour la connexion électrique d'un busbar ou d'un conducteur collecteur.

8. Système photovoltaïque (10) selon la revendication 6 ou 7, **caractérisé en ce que** le boîtier (11) du premier module de connecteurs enfichable (1A) et le boîtier (12) du deuxième module de connecteurs enfichable (1B) et la plaque de montage (7) sont fabriqués à partir de matériaux présentant des coefficients de dilatation thermique similaires et/ou que le boîtier (11) du premier module de connecteurs enfichable (1A) et le boîtier (12) du deuxième module de connecteurs enfichable (1B) et le dispositif de passage (5) sont fabriqués à partir de matériaux présentant des coefficients de dilatation thermique similaires et/ou que la plaque de montage (7) et le dispositif de passage (5) sont fabriqués à partir de matériaux présentant des coefficients de dilatation thermique similaires et/ou que le dispositif de passage (5) est conçu de manière à pouvoir compenser les contraintes mécaniques dues à des dilatations thermiques différentes.

9. Système photovoltaïque (10) selon une des revendications 1 - 8, **caractérisé en ce qu'**un dispositif de surveillance (60) est prévu pour surveiller le système photovoltaïque (10), au moyen duquel les tensions aux terminaux (DA, DB; DB, DC; DC, DD) des diodes de dérivation (D11; D12; D13) peuvent être mesurées et évaluées et une irrégularité ou un dysfonctionnement, en particulier un dysfonctionnement de l'une des diodes de dérivation (D11, D12, D13, D21, D22, D32, ..., Dn1, Dn2, Dn3), peut être détecté et, de préférence, signalé.

10. Procédé de surveillance d'un système photovoltaïque (10) selon une des revendications 1 - 9, **caractérisé en ce qu'**il est prévu un dispositif de surveillance (60) au moyen duquel les tensions aux terminaux (DA, DB; DB, DC; DC, DD) des diodes de dérivation (D11; D12; D13) sont mesurables et évaluables et qu'une irrégularité ou un dysfonctionnement du système photovoltaïque (10), en particulier un dysfonctionnement de l'une des diodes de dérivation (D11, D12, D13, D21, D22, D32,..., Dn1, Dn2, Dn3), peut être détecté et, de préférence, signalé.

11. Procédé selon la revendication 10, **caractérisé en ce que** les tensions aux terminaux (DA, DB ; DB, DC ; DC, DD) des diodes de dérivation (D11 ; D12 ; D13) et/ou les courbes temporelles des tensions aux terminaux (DA, DB ; DB, DC ; DC, DD) des diodes de dérivation (D11 ; D12 ; D13) sont mesurées et évaluées, alors que des valeurs mesurées sont de préférence comparées entre elles ou avec des valeurs de consigne afin de détecter des interruptions électriques ou des défauts des diodes de dérivation (D11 ; D12 ; D13) ou des ombrages à long terme.

12. Connecteur enfichable (1) pour un système photovoltaïque (10) selon une des revendications 1 - 11, comprenant deux modules de connecteurs enfichables (1A, 1B) qui présentent des contacts de connecteurs enfichables (3A, 3B, 3C, 3D; 4A, 4B, 4C, 4D) pour la connexion électriquement isolée de connexions électriques (SA, SB; SB, SC; SC, SD) d'un module photovoltaïque (P1, P2, ..., Pn) avec des lignes de connexion (2A, 2B, 2C, 2D).

13. Connecteur enfichable (1) selon la revendication 12, **caractérisé en ce que** le premier module de connecteur enfichable (1A) comporte des premiers éléments de verrouillage élastiques (126, 116') disposés latéralement, qui sont réalisés en forme de tige et sont pourvus d'un premier élément d'encliquetage (1261), et **en ce que** le deuxième module de connecteur enfichable (1B) comporte des deuxièmes éléments de verrouillage (126, 126') disposés latéralement, correspondant aux premiers éléments de verrouillage (116, 116'), qui sont réalisés en forme de douilles et comportent un deuxième élément d'encliquetage (1160) correspondant au premier élément d'encliquetage (1261), de sorte que le premier module de connecteur (1A) peut être relié de manière amovible au deuxième module de connecteur (1B) par verrouillage des premiers éléments de verrouillage (116, 116') avec les deuxièmes éléments de verrouillage (126, 126').

14. Connecteur enfichable (1) selon la revendication 12 ou 13, **caractérisé en ce que** le premier module de connecteur enfichable (1A) présente, sur le boîtier (12), une bride de montage (1203) sur laquelle le premier module de connecteur enfichable (1A) peut être fixé à une plaque de montage (7).

15. Connecteur enfichable (1) selon la revendication 14, **caractérisé en ce que** le premier module de connecteur enfichable (1A) peut être fixé à la plaque de montage (7) par laminage ou collage.
